# EUROPEAN PATENT APPLICATION

(11) **EP 3 672 033 A1**
(43) Date of publication of application: **24.06.2020**
(21) Application number: 18215587.9
(22) Date of filing: 21.12.2018
(51) Int. Cl.: H02K 7/18, H02K 7/16, H02K 11/30, F02K 9/46, F02K 9/48, B60R 16/03, F03B 3/10, F04D 25/06, H02K 21/14

(54) **COMBINATION OF AN ELECTRIC GENERATOR AND A TURBOPUMP**

(71) Applicant: ArianeGroup GmbH, 82024 Taufkirchen (DE)
(72) Inventor: Sebald, Johannes, 28199 Bremen (DE); Soller, Dr.-Ing. Sebastian, 82024 Taufkirchen (DE); Alting, Jan, 82024 Taufkirchen (DE)
(74) Representative: Marschall, Stefan

(57) **Abstract**

Disclosed is an electric generator comprising a stator (10) and a rotor (20). The stator comprises one or more electric coils which are connected or connectable to an electronic unit (40). The rotor (20) comprises a rotor shaft (21) having at least one permanent magnet (22, 23) fixed thereto, so as to induce electric voltage in the one or more electric coils when the rotor (20) is rotated. Therein, the rotor shaft (11) is a pump shaft for driving at least one impeller (2) of a turbopump (100).

Further disclosed are a turbopump (100) comprising an electric generator (1), as well as a rocket stage and a spacecraft each comprising a turbopump with an electric generator adapted to provide electric energy for an avionics system.

## Description

The present invention concerns an electric generator and a turbopump. The invention further concerns a rocket stage of a multistage rocket and a spacecraft, respectively comprising an avionics system and a turbopump.

For providing electrical energy to avionic systems of rockets or other spacecrafts, usually batteries are used, which may comprise non-rechargeable (primary) cells or rechargeable (secondary) cells; such energy system is described, for instance, in "Evolutions of the Ariane 5 Electrical Power System" of H. Barde, C. Urruty, C., and J. Jaumes, published in: Space Power, Proceedings of the Sixth European Conference held 6-10 May, 2002 in Porto, Portugal, Edited by A. Wilson, European Space Agency, ESA SP-502, 2002, p.659.

In particular, fuel cells converting chemical energy into electrical energy may be employed, as has been realised e.g. in the Apollo Command and Service Modul (CSM) and the Space Shuttle. In planetary missions, nuclear batteries (also called "Radioisotope Thermoelectric Generators" (RTG)) may also be used.

However, utilisation of batteries generally requires maintenance and control of charge state. Moreover, the mass of the batteries to be carried by a flying spacecraft implies additional effort and energy consumption.

It is therefore an object of the present invention to overcome or at least reduce the above-mentioned disadvantages, and to provide for an alternative source of energy particularly adapted for flying objects such as spacecrafts. It is a further object to provide a rocket stage and a spacecraft equipped with such energy source.

The problem is solved by an electric generator according to claim 1, a turbopump according to claim 6, a rocket stage according to claim 7 and a spacecraft according to claim 8. Advantageous embodiments are disclosed in the dependent claims, the description and the figure.

An electric generator according to the present invention comprises a stator with one or more electric coils (i.e., coils of an electrically conductive material, such as copper) being electrically connected or connectable to an electronic unit; the electronic unit may form part of the electric generator or may be a separate unit. The electric generator further comprises a rotor with a rotor shaft having one or more permanent magnets fixed thereto. The permanent magnets and the electric coils are arranged with respect to each other such that, by rotation of the rotor, the permanent magnets induce electric voltage in the one or more electric coils. Further to serving for rotation of the permanent magnets, the rotor shaft is a pump shaft of a turbopump.

That is, according to the present invention, rotational energy of the rotor shaft can both be converted into electrical energy and (possibly at the same time) be used to drive an impeller of the turbopump and, therewith, to force a propellant towards a combustion chamber.

The rotor shaft thus provides a combined function, wherein in particular, a minimum of construction parts and of mass is needed. Moreover, as compared to utilisation of batteries for providing electric energy, control and service (such as recharge) can be reduced or even avoided.

In particular, the rotor shaft may be fixed or configured to be fixed to the impeller. The rotor shaft may be a main shaft of the turbopump.

Preferably, at least one of the permanent magnet(s) and the impeller are each mounted to the rotor shaft such that they are fixed relative to each other. Accordingly, when the rotor shaft rotates, the at least one permanent magnet and the impeller exhibit the same rotational speed.

One or more of the at least one permanent magnet is/are preferably shrink fitted to a sleeve of the rotor shaft. Such sleeve may at least partially consist of a titanium material. Therewith, an especially solid fixation of the permanent magnet can be achieved, which allows for rotating the rotor shaft with a particularly high rotational speed.

According to preferred embodiments, the electric generator is adapted to megaspeed operation, with an achievable rotational speed maximum of at least 50 000 r/min, at least 100 000 r/min, at least 150 000 r/min, at least 450 000 r/min or at least 500 000 r/min. Stated differently, the rotor of such electric generator is capable of reaching or exceeding a rotational speed of at least 50 000 r/min, at least 100 000 r/min or at least 150 000 r/min, at least 450 000 r/min or even at least 500 000 r/min; possibilities of constructing such electric generators are described and referenced in document "Megaspeed Drive Systems: Pushing Beyond 1 Million r/min" of C. Zwyssig, J. W. Kolar and S. D. Round, published in Mechatronics, IEEE/ASME Transactions on Vol. 14 , No. 5, pp. 564-574, 2009, and in document "Efficiency Optimization of a 100-W 500 000-r/min Permanent-Magnet Machine Including Air-Friction Losses" of J. Luomi, C. Zwyssig, A. Looser and J.W. Kolar, published in IEEE Transactions on Industry Applications, Volume 45, Issue 4.

Such rotational speeds provide for a particularly efficient action of the turbopump, as the impeller thereof is driven by the rotor shaft of the electric generator and preferably coupled thereto so as to have the same rotational speed.

According to preferred embodiments of the present invention, at least one of the one or more electric coils has a winding axis extending in a direction towards the rotor shaft. In particular, such winding axis/axes may extend radially with respect to a rotation axis of the rotor shaft.

The electric unit may form part of the inventive electric generator. Preferably, the electric unit is configured to process electric voltage induced in the one or more electric coils for utilisation in aviation electronics and/or for launching electronics. Said processing may comprise, for example, converting a respective voltage to a voltage used by the aviation electronic and/or intermediately storing electric energy by means of one or more capacitors and/or rechargeable (secondary) cells.

The rotor shaft (and thus, the pump shaft) of an electric generator according to the present invention may be configured to have its rotation driven by a gas turbine which may form part of the claimed electric generator.

A turbopump according to the present invention serves for feeding a combustion chamber with a propellant (which may preferably be liquid), in particular with a fuel and/or an oxidant. The turbopump comprises at least one impeller and an electric generator according to an embodiment of the present invention. Therein, the rotor shaft is configured to drive the at least one impeller, i.e., the rotor shaft of the electric generator is a pump shaft of the turbopump.

The inventive turbopump thus integrates the functions of supplying propellant to the combustion chamber with high pressure, and generating electricity for further use. Therein, due to the inventive concept, a minimum of mass and service is required. In particular, the turbopump may be configured to provide pressurised propellant into a combustion chamber of a rocket stage, a rocket or other spacecraft.

The turbopump may comprise a gas generator for driving the pump shaft (and thus, the rotor shaft of the electric generator). Alternatively, for driving the pump shaft, the turbopump may comprise a turbine of an expander cycle configured to generate a gas flow by phase transition of hydrogen using a heat exchanger. As a further alternative, the turbopump may comprise one or more engine turbopump turbine(s) of a combustion tap-off cycle, the engine turbopump turbine(s) configured to drive the pump shaft using a portion of a gas flow conveyed from a combustion chamber.

Preferably, the one or more coils of the electric generator of an inventive turbopump are arranged at the exterior of a turbopump housing for pressurising the propellant, and the at least one permanent magnet is fixed to a rotor shaft portion projecting from said turbopump housing.

A rocket stage according to the present invention is a stage for or of a multistage rocket. The rocket stage comprises at least one combustion chamber of an engine and, for feeding the combustion chamber with a propellant, at least one turbopump according to an embodiment of the present invention. The electric generator of the at least one turbopump is configured to provide an avionics system with electric energy. The avionics system may be comprised by the rocket stage or may be at least a part of an avionics system of a further rocket stage (combined or to be combined with the rocket stage) and/or of a load (such as a satellite) carried or to be carried by a rocket comprising the rocket stage. The electronic unit of the electric generator may preferably be connected or connectable to said avionics system.

A spacecraft according to the present invention comprises an avionics system, at least one combustion chamber and, for feeding the combustion chamber with a propellant, at least one turbopump according to an embodiment of the present invention. The electric generator of the at least one turbopump is configured to provide the avionics system with electric energy.

The spacecraft may, in particular, be a rocket, such as a multistage rocket.

An inventive rocket stage and an inventive spacecraft each provide for the particular advantage that the respectively included electric generator may be employed, on a respective mission, depending on the particular requirements. The power supply system may thus be provided independently on the details of the respective mission; thereby, the construction of the rocket stage and spacecraft, respectively, is simplified, and the rocket stage and spacecraft itself has a large field of applicability.

In the following, a preferred embodiment of the present invention is explained with respect to the accompanying drawing. As is to be understood, the various elements and components are depicted as examples only, may be facultative and/or combined in a manner different than that depicted.

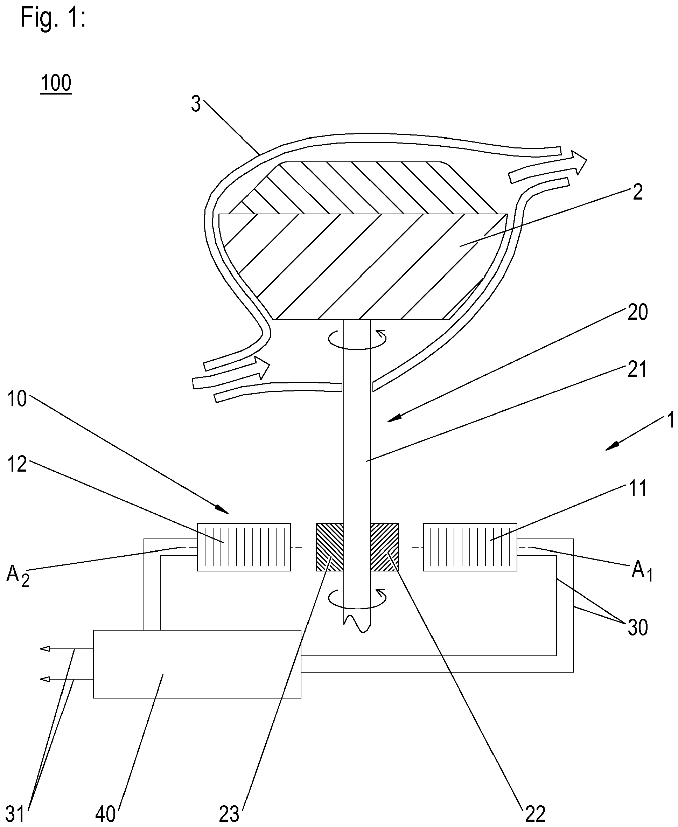

Shown is schematically in
Fig. 1: an exemplary turbopump according to the present invention.

In Figure 1, an exemplary embodiment of a turbopump 100 according to the present invention is schematically shown. The turbopump 100 comprises a housing 3 and an impeller 2. As indicated by arrows, by rotation of the impeller 2, a propellant (not shown) in the housing 3 is pressurised and forced outside the housing and towards a combustion chamber (not shown either).

The turbopump 100 further comprises an electric generator 1 with a stator 10 and a rotor 20. The rotor 20 comprises a rotor shaft 21 having permanent magnets 22, 23 fixed thereto. The stator 10 comprises electric coils 11, 12 facing the permanent magnets 22, 23 of the rotor 20 and each having a respective winding axis A₁, A₂ which, in the example depicted, extends radially with respect to the rotor shaft 21.

By rotation of the rotor shaft 21, the permanent magnets 22, 23 fixed thereto induce electric voltage in the coils 11, 12, which are connected, by electric lines 30, to an electronic unit 40. The electronic unit is configured to process the voltage for utilisation in at least one power sink; such power sink may comprise an avionics system (which may include flight electronics), means for intermediate storage of electrical energy (like at least one goldcap or at least one secondary element) and/or launching electronics (not shown). Electric lines 31 conduct the processed voltage to the power sink.

The rotation of the rotor shaft 21 may be accomplishable by means of a gas generator (not shown).

The rotor shaft 21 is coupled to the impeller 2. Therefore, it is configured to operate both as a pump shaft of the turbopump 100 and as a rotor shaft effecting the rotation of the permanent magnets for induction of electric voltage by the electric generator 1.

Accordingly, the electric generator 1 is constructed so as to make use of the pump shaft and the drive thereof. These elements thus provide a double function, which provides for saving both mass and space. Additionally, the electric generator makes inclusion of batteries dispensable or at least reducable. As a consequence, service operations such as charge control are reduced. Moreover, the electric generator can be dynamically operated depending on a respective need. An arrangement including the turbopump 100, such as a rocket stage, thus has a large field of applicability, whereas an adaptation to a particular mission in terms of an adaption of battery storage can be avoided at least with regard to the power supply to the avionics system.

Disclosed is an electric generator comprising a stator 10 and a rotor 20. The stator comprises one or more electric coils which are connected or connectable to an electronic unit 40. The rotor 20 comprises a rotor shaft 21 having at least one permanent magnet 22, 23 fixed thereto, so as to induce electric voltage in the one or more electric coils when the rotor 20 is rotated. Therein, the rotor shaft 11 is a pump shaft for driving at least one impeller 2 of a turbopump 100.

Further disclosed are a turbopump 100 comprising an electric generator 1, as well as a rocket stage and a spacecraft each comprising a turbopump with an electric generator adapted to provide electric energy for an avionics system.

### Reference signs

- 1: electric generator
- 2: impeller
- 3: housing

- 10: stator
- 11, 12: electric coils
- 20: rotor
- 21: rotor shaft
- 22, 23: permanent magnets
- 30, 31: electric lines
- 40: electronic unit

- 100: turbopump

- A₁, A₂: winding axes of electric coils 11, 12

## Claims

1. Electric generator (1) comprising
- a stator (10) comprising one or more electric coils (11, 12) being connected or connectable to an electronic unit (40); and
- a rotor (20) with a rotor shaft (21) having at least one permanent magnet (22, 23) fixed thereto, so as to induce electric voltage in the one or more electric coils when the rotor (20) is rotated,
**characterised in that** the rotor shaft (21) is a pump shaft for driving at least one impeller (2) of a turbopump (100).

2. Electric generator according to claim 1, which is adapted to megaspeed operation, with a rotational speed maximum of at least 50 000 r/min, at least 100 000 r/min, at least 150 000 r/min, at least 450 000 r/min or at least 500 000 r/min.

3. Electric generator according to one of claims 1 or 2, wherein the rotor shaft (11) is a main shaft of the turbopump.

4. Electric generator according to one of the preceding claims, further comprising the electronic unit (40).

5. Electric generator according to claim 4, wherein the electronic unit is configured to process electric voltage induced in the one or more electric coils (21, 22) for utilisation in aviation electronics, for launching electronics and/or for intermediate power storage.

6. Turbo pump (100) for feeding a combustion chamber with a propellant, the turbopump comprising at least one impeller and an electric generator (1) according to one of the preceding claims, wherein the rotor shaft (21) of the electric generator is configured to drive the at least one impeller.

7. Rocket stage for or of a multistage rocket, the rocket stage comprising at least one combustion chamber and, for feeding the combustion chamber with a propellant, at least one turbopump (100) according to claim 6, wherein the electric generator (1) of the turbopump is configured to provide electric energy for an avionics system.

8. Spacecraft comprising an avionics system, at least one combustion chamber and, for feeding the combustion chamber with a propellant, at least one turbopump (100) according to claim 6, the at least one electric generator (1) of which is configured to provide the avionics system with electric energy.
